# EUROPÄISCHE PATENTSCHRIFT

(11) **EP 0 561 124 B1**
(45) Veröffentlichungstag und Bekanntmachung des Hinweises auf die Patenterteilung: **31.03.2004**
(21) Anmeldenummer: 93101232.2
(22) Anmeldetag: 28.01.1993
(51) Int. Cl.: G06K 7/00

(54) **Einrichtung und Verfahren zur Feststellung von Betrugsversuchen an einer Vorrichtung zum Lesen und Beschreiben einer Chip-Karte**
Device and method for establishing forgery attempts of a chip card reader/writer
Dispositif et méthode d'établissement de tentatives de fraudes d'un appareil de lecture et d'écriture d'une carte à puce

(30) Priorität: 17.03.1992 CH 85492; 25.05.1992 CH 167992; 16.11.1992 CH 351992
(43) Veröffentlichungstag der Anmeldung: 22.09.1993
(73) Patentinhaber: IPM International SA, 1211 Genève 16 (CH)
(72) Erfinder: Philippe, Vauclin, F-74250 Viuz en Sallaz (FR)
(74) Vertreter: Müller, Hans-Jürgen, Dipl.-Ing.

(56) Entgegenhaltungen:
- EP-A- 0 468 848
- DE-A- 2 919 158
- FR-A- 2 646 260
- FR-A- 2 646 261
- FR-A- 2 659 770

## Beschreibung

Die Erfindung bezieht sich auf eine Einrichtung und ein Verfahren zur Feststellung von Betrugsversuchen an einer Vorrichtung zum Lesen und Beschreiben einer Chip-Karte der im Oberbegriff der Ansprüche 1 und 13 genannten Art.

Solche Einrichtungen werden vorteilhaft in Dienstleistungssystemen - beispielsweise in selbstkassierenden Telefonstationen (Payphone) - verwendet, welche mit elektronischen Chip-Karten arbeiten.

Bei einem Betrugsversuch wird eine abgeänderte Chip-Karte oder eine ihr äusserlich ähnliche Karte mit gleich angeordneten Anschlusspunkten verwendet, wobei mindestens einer der Anschlusspunkte mit einer elektrischen Zuleitung eines ausserhalb der Schreib- und Lesevorrichtung vorhandenen Gerätes, mit dessen Hilfe der Betrugsversuch vorgenommen wird, verbunden ist. Der Betrugsversuch kann festgestellt werden, indem geprüft wird, ob eine solche unzulässige Zuleitung vorhanden ist.

Es ist eine Einrichtung der im Oberbegriff des Anspruchs 1 genannten Art bekannt (EP 0 468 848 A1), bei der mit Hilfe eines induktiven Fühlers und eines nachgeschalteten selektiven Filters ein Signal in einer allfällig vorhandenen Zuleitung eines Kartenaufnehmers detektierbar ist, wobei ausgenutzt wird, dass eine Chip-Karte beim Lesen und Beschreiben durch Signale mit einer bekannten, genormten Frequenz bearbeitet wird.

Es ist auch bekannt, im Kartenaufnehmer an einem Ende der Chip-Karte einen Sender und am anderen Ende einen Empfänger anzuordnen und eine allfällig vorhandene Zuleitung als Übertragungsmedium zu nutzen, wobei die Kopplung auf der Senderseite galvanisch und auf der Empfängerseite induktiv (EP 0 323 347 A1, FR 2 554 262, FR 2 646 260) oder kapazitiv (FR 2 646 260) erfolgt, oder wobei die Kopplung auf der Senderseite induktiv und auf der Empfängerseite induktiv (EP 0 447 686) oder galvanisch (EP 0 454 570) wirkt.

Ausserdem ist eine Einrichtung mit einem Oszillator bekannt (FR 2 646 261), der ein frequenzbestimmendes Element aufweist, welches über die Chip-Karte hinweg bewegt wird, so dass die allfällig vorhandene Zuleitung eine Störung am Ausgang des Oszillators verursacht.

Die FR 2 659 770 A1 beschreibt eine Einrichtung zur Feststellung von Chip-Karten, deren Kontaktflächen mit unautorisierten Zuleitungen zu Betrugszwecken versehen sind. Die Einrichtung überprüft die Impedanzen zwischen den Kontaktflächen der Chip-Karte bevor die Einrichtung die Abfrage der Chip-Karte beginnt. Die gemessenen Impedanzen werden mit gespeicherten Sollwerten verglichen. Die unbefugt angebrachten Zuleitungen verändern diese Impedanzen derart, daß die Einrichtung die Abweichung von den Sollwerten erkennt und die Karte zurückweist.

Bei den bekannten Einrichtungen sind im Kartenaufnehmer im Bereich der Chip-Karte mechanische Einrichtungen wie beispielsweise Antennen oder bewegliche Sensoren derart anzuordnen, dass sie vor Beschädigungewn weitgehend geschützt sind.

Der Erfindung liegt die Aufgabe zugrunde, eine zuverlässige und gut geschützte Einrichtung und ein entsprechendes Verfahren zur sicheren Feststellung von Betrugsversuchen an einer Vorrichtung zum Lesen und Beschreiben einer Chip-Karte anzugeben.

Die Erfindung löst diese Aufgabe durch die kennzeichnenden Merkmale der unabhängigen Ansprüche 1 und 13. Vorteilhafte Ausgestaltungen ergeben sich aus den abhängigen Unteransprüchen und sind dort gekennzeichnet.

Nachfolgend werden vorteilhafte Ausführungsbeispiele der Erfindung anhand der Zeichnungen näher erläutert.

Es zeigen:
- Fig. 1: das Prinzip einer Einrichtung zur Feststellung von Betrugsversuchen an einer Vorrichtung zum Lesen und Beschreiben einer Chip-Karte,
- Fig. 2: eine Variante der Einrichtung mit einem Leiter als Resonator,
- Fig. 3: eine Variante der Einrichtung mit einem Parallelschwingkreis als Resonator,
- Fig. 4: eine Variante der Einrichtung mit einem Serieschwingkreis als Resonator,
- Fig. 5a: eine Variante der Einrichtung im Aufriss,
- Fig. 5b: Teile der Einrichtung nach Fig. 5a im Seitenriss,
- Fig. 6: eine Variante der Einrichtung mit einem mindestens zwei Abgriffe aufweisenden Leiter als Resonator,
- Fig. 7: ein ausführliches Blockschaltbild einer Variante der Einrichtung mit einem Resonator nach Fig. 6 und
- Fig. 8: ein Ausführungsbeispiel eines Resonators nach Fig. 6.

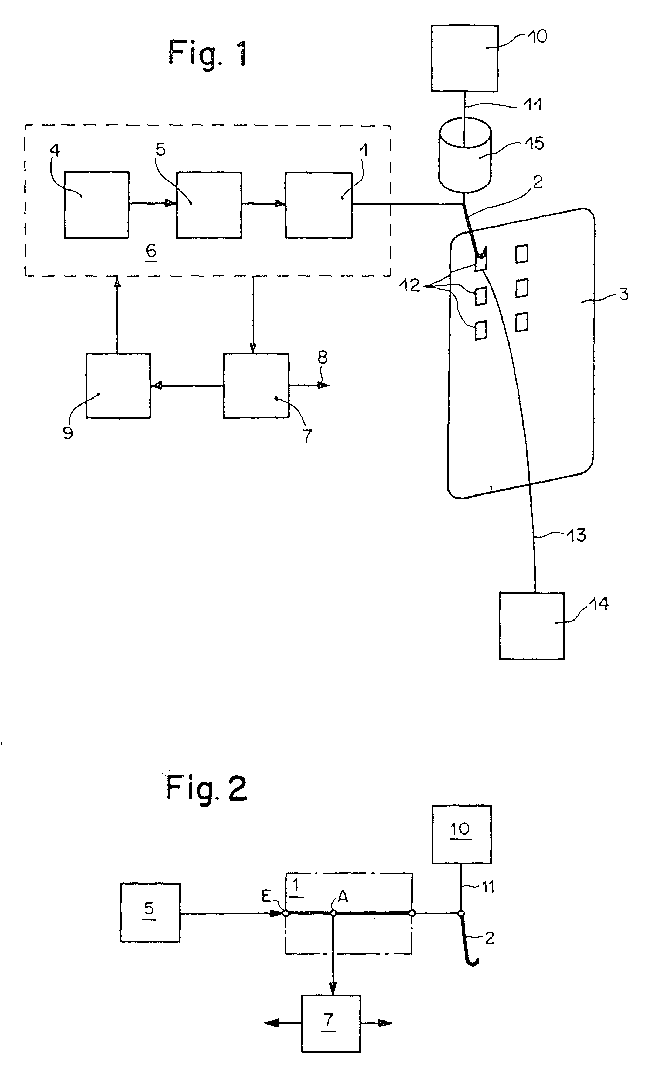

In der Fig. 1 bedeutet 1 einen Resonator, der mit einem Kontaktierungselement 2 einer bekannten Vorrichtung (Chipcard Reader/Writer) zum Lesen und Beschreiben eines Speichers einer ebenfalls bekannten Chip-Karte 3 galvanisch gekoppelt ist und der zusammen mit einem Generator 4 und einem Impedanzwandler 5 eine Resonanzeinheit 6 bildet, wobei der Ausgang des Generators 4 über den Impedanzwandler 5 mit dem Resonator 1 verbunden ist. Eine Messeinrichtung 7 mit einem Alarmausgang 8 für ein Alarmsignal weist mindestens einen mit der Resonanzeinheit 6 verbundenen Eingang sowie einen Ausgang auf, der über ein Stellglied 9 auf die Resonanzeinheit 6 zurückgeführt ist.

Ausser dem Kontaktierungselement 2 weist die Vorrichtung zum Lesen und Beschreiben des Speichers der Chip-Karte 3 weitere gleichartige, jedoch nicht gezeichnete Kontaktierungselemente, eine Bearbeitungseinheit 10 sowie einen in der Zeichnung nicht dargestellten Kartenaufnehmer mit einer Eingabeöffnung für die Chip-Karte 3 auf. Jedes der Kontaktierungselemente ist je über eine elektrische Leitung 11 mit der Bearbeitungseinheit 10 verbunden.

Die Chip-Karte 3 ist eine Wertkarte, welche mindestens einen elektronischen Baustein, beispielsweise einen Mikrocomputer oder einen Speicher aufweist, welcher über eine Anzahl Anschlusspunkte 12 für die Schreib- und Lesevorrichtung zugreifbar ist, die für jeden der Anschlusspunkte 12 ein Kontaktierungselement 2 aufweist. Die Anzahl der Anschlusspunkte 12 und deren Anordnung auf der Chip-Karte 3 ist genormt, wobei unterschiedliche Normen bestehen.

Bei einem Betrugsversuch wird bekannterweise bevorzugt eine abgeänderte Chip-Karte 3 oder eine ihr äusserlich ähnliche Karte mit den gleich angeordneten Anschlusspunkten 12 verwendet, wobei mindestens einer der Anschlusspunkte 12 mit einer elektrischen Zuleitung 13 eines ausserhalb der Vorrichtung vorhandenen Gerätes 14 verbunden ist. Wenn die Chip-Karte der Vorrichtung übergeben wird, wird eine allfällig vorhandene Zuleitung 13 mit dem entsprechenden Kontaktierungselement 2 verbunden. Das dem Betrugsversuch dienende Gerät 14 ist beispielsweise ein Messgerät oder ein Simulator.

Eine Einrichtung zur Feststellung des Betrugsversuchs durch Anschliessen der Zuleitung 13 an das Kontaktierungselement 2 besteht aus der Resonanzeinheit 6, der Messeinrichtung 7, dem Stellglied 9 und einem Abschirmungsmittel 15, welches zwischen der Resonanzeinheit 6 und den Leitungen 11 angeordnet ist; Einzelheiten der Einrichtung sowie deren Funktion werden im folgenden beschrieben.

Der Generator 4, dessen Ausgangsimpedanz durch den Impedanzwandler 5 auf den Resonator 1 abgestimmt ist, erzeugt im Resonator 1 eine elektromagnetische Schwingung mit einer Frequenz von beispielsweise einem GHz.

Vorzugsweise ist die Resonanzeinheit 6 so abgestimmt, dass sich mindestens dann im Resonator 1 eine stehende Welle aufbaut, wenn die Zuleitung 13 zu dem mit dem Resonator 1 über das Kontaktierungselement 2 verbundenen Anschlusspunkt 12 fehlt. Durch die Zuleitung 13 werden die Eigenschaften des Resonators gestört, so dass seine Eingangsimpedanz und die Schwingung messbar verändert werden.

Mit Vorteil ist der Resonator 1 gemäss der Fig. 2 ein elektrischer Leiter beziehungsweise ein Wellenleiter, der in der Form eines Drahtes, einer Litze, einer Leiterbahn oder eines Hohlkörpers ausgebildet ist, und der mindestens einen Abgriff A aufweist, welcher galvanisch mit dem Eingang der Messeinrichtung 7 verbunden ist. Der Abgriff A liegt vorzugsweise in der Nähe eines Knotens der stehenden Welle.

Die Messeinrichtung 7 misst in einer ersten Variante der Einrichtung die elektrische Spannung am Abgriff A und vergleicht den Messwert mit einem vorbestimmten Sollwert der Spannung, welche am Abgriff A anliegt, wenn die Zuleitung 13 am Kontaktierungselement 2 nicht angeschlossen ist. Aufgrund der Grösse der Differenz zwischen dem Messwert und dem Sollwert wird ein Betrugsversuch erkannt und das Alarmsignal beispielsweise am Ausgang eines zur Messeinrichtung 7 gehörenden Schwellenschalters generiert.

Mit Vorteil verfügt die Messeinrichtung 7 über Aufbereitungsmittel wie beispielsweise Verstärker oder Filter, damit der Messwert zuverlässig erfassbar ist.

Das Alarmsignal wird vorteilhaft von der Bearbeitungseinheit 10 in bekannter Weise ausgewertet.

Das Stellglied 9 ermöglicht eine Rückwirkung des Messwerts auf den Generator 4 und/oder den Impedanzwandler 5, so dass im Bedarfsfall die Frequenz des Generators 4 und die ausgangsseitige Impedanz des Impedanzwandlers 5 von der Messeinrichtung 7 aus verändert werden können.

Das Abschirmungsmittel 15 schützt einerseits die Bearbeitungseinheit 10 vor Störungen, welche durch die Resonanzeinheit 6 verursacht werden, und bewahrt anderseits die Einrichtung vor störenden Einflüssen der Leitungen 11.

In einer zweiten Variante wird mit Vorteil die Spannung oder die Impedanz am Eingang des Resonators 1 gemessen und mit einem vorbestimmten Sollwert der Impedanz bzw. der Spannung verglichen. Der Sollwert ist die Impedanz des Resonators 1 bzw. die Spannung am Resonators 1 ohne die Zuleitung 13 am Kontaktierungselement 2.

Die erste und die zweite Variante sind erfolgreich kombinierbar.

In einer dritten Variante der Einrichtung wird durch eine Veränderung am Generator 4 die Frequenz der Schwingung im Resonator 1 so lange verändert, bis die Spannung am Abgriff A einen bestimmten Zielwert erreicht. Der Zielwert ist gleich demjenigen Wert der Spannung, die bei einem vorbestimmten Sollwert der Frequenz der Schwingung am Abgriff A liegt, sofern die Zuleitung 13 am Kontaktierungselement 2 nicht angeschlossen ist. Die Messeinrichtung 7 ermittelt einen Messwert der Frequenz der Schwingung beispielsweise über einen weiteren, mit dem Ausgang des Generators verbundenen Eingang und vergleicht den Messwert mit dem Sollwert der Frequenz. Anhand der Grösse der Differenz zwischen dem Messwert und dem Sollwert wird ein Betrugsversuch erkannt.

Die dritte und die zweite Variante sind erfolgreich kombinierbar.

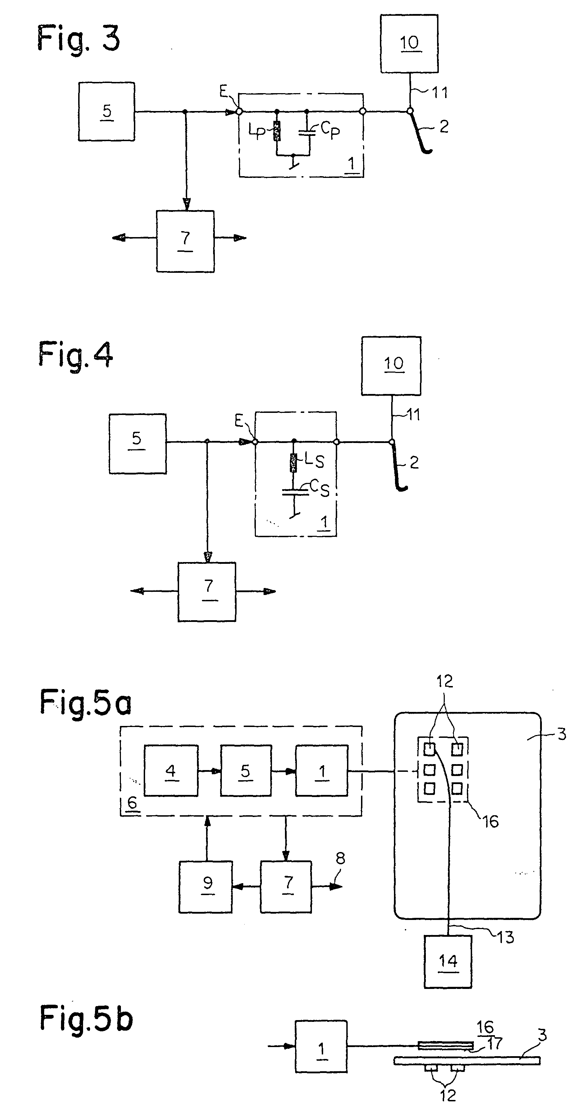

In einer vierten Variante der Einrichtung ist der Resonator 1 entweder gemäss Fig. 3 ein aus einer Spule Lₚ und einem Kondensator Cₚ bestehender Parallelschwingkreis oder gemäss Fig. 4 ein aus einer Spule Lₛ und einem Kondensator Cₛ bestehender Serieschwingkreis, dessen Güte durch die Zuleitung 13 (Fig. 1) verändert wird. Mit Vorteil wird in dieser Variante die Spannung oder die Impedanz am Eingang E des Resonators 1 gemessen und mit einem vorbestimmten Sollwert der Impedanz bzw. der Spannung verglichen, welche der Resonator 1 ohne die Zuleitung 13 am Kontaktierungselement 2 aufweist.

Dadurch, dass in der Einrichtung die elektrischen Eigenschaften der mit dem Kontaktierungselement 2 galvanisch verbundenen, im Gigahertz-Bereich arbeitenden Resonanzeinheit 6 durch eine Zuleitung 13 messbar beeinflusst werden, ist eine Zuleitung 13 unabhängig von ihrem Durchmesser, von ihrer Lage oder von ihrer Abschirmung sicher feststellbar.

Die Einrichtung kann vollständig ausserhalb des Kartenaufnehmers angeordnet werden, da sie nur an das Kontaktierungselement 2 gekoppelt ist. Im Raum zwischen dem elektronischen Baustein (Mikrocomputer oder Speicher) der Chip-Karte 3 und der Eingabeöffnung des Kartenaufnehmers sind keinerlei Vorkehrungen erforderlich.

Der Resonator 1 wird bevorzugt mit jenem Kontaktierungselement 2 gekoppelt, welches den Potentialbezugspunkt (Signal-Ground) der Chip-Karte 3 kontaktiert.

In der Fig. 5 weist der Resonator 1 anstelle der galvanischen Verbindung zum Kontaktierungselement 2 (Fig. 1) ein Kopplungsglied 16 für eine nicht galvanische Kopplung des Resonators 1 an die Anschlusspunkte 12 und damit an die Zuleitung 13 auf. Die Kopplung erfolgt je nach Art des Kopplungsgliedes 16 kapazitiv oder induktiv.

Für eine kapazitive Kopplung des Resonators 1 ist das Kopplungsglied 16 derart ausgebildet, dass eine Spannung am Ausgang des Resonators 1 über ein elektrisches Feld von der Zuleitung 13 beeinflusst wird.

Das Kopplungsglied 16 für eine kapazitive Kopplung weist mit Vorteil eine zu den beiden grössten ebenen Flächen der Chip-Karte 3 parallele Schicht 17 aus einem Metall auf, welche gegenüber einer die Anschlusspunkte 12 der Chip-Karte 3 eingrenzenden Zone angeordnet ist und etwa die Fläche der Zone abdeckt.

Für eine induktive Kopplung des Resonators 1 ist das Kopplungsglied 16 derart ausgebildet, dass ein Strom im Resonator 1 über ein Magnetfeld von der Zuleitung 13 beeinflusst wird.

Die über das Kopplungsglied 16 mit dem Resonator 1 gekoppelte elektrische Zuleitung 13 an einem der Anschlusspunkte 12 verändert die von der Messeinrichtung 7 erfassten Eigenschaften des Resonators 1.

Mit der weiteren Ausführung der Einrichtung ist der Betrugsversuch feststellbar, ohne dass die Anschlusspunkte 12 der Chip-Karte 3 mit den Kontaktierungselementen 2 in galvanischer Verbindung stehen. Der Betrugsversuch kann somit mit Vorteil vor dem Anlegen der Kontaktierungselemente 2 an die Anschlusspunkte 12 oder auch beim Einschieben der Chip-Karte 3 in die Vorrichtung zum Lesen und Beschreiben der Chip-Karte festgestellt werden, wobei die Eigenschaften des Resonators 1 vorteilhafterweise weitgehend unabhängig von den Kontaktierungselementen 2 und von den Leitungen 11 sind.

Im weitern sind die Eigenschaften des Resonators 1 weitgehend unabhängig vom eingebauten elektronischen Baustein auf der Chip-Karte 3; die Einrichtung ist deshalb mit Vorteil unverändert für verschiedene Ausführungen der Chip-Karte 3 einsetzbar.

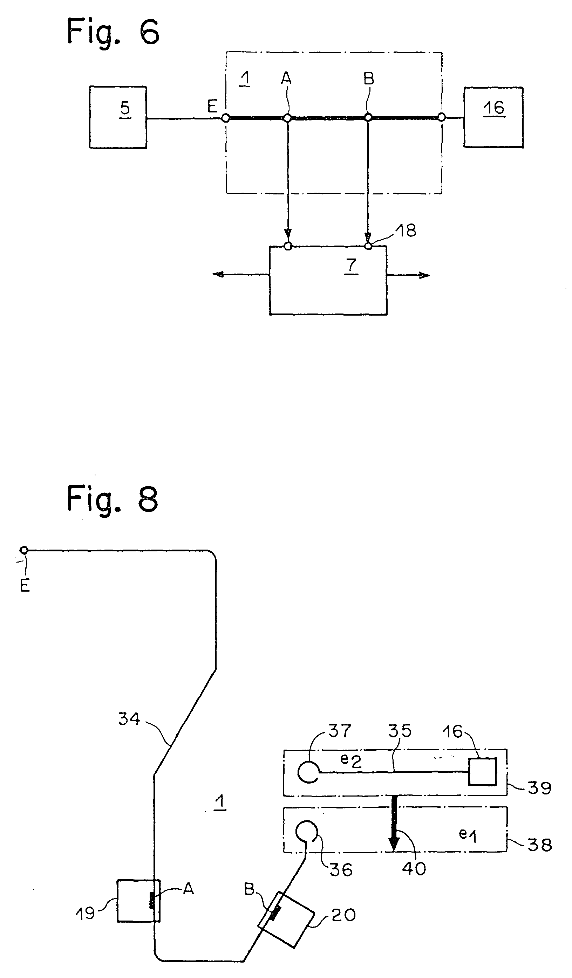

Die Fig. 6 zeigt einen Teil einer fünften Variante der Einrichtung, in welcher der Resonator 1 ein elektrischer Leiter beziehungsweise Wellenleiter ist, wobei der Resonator 1 den mit dem Eingang der Messeinrichtung 7 verbundenen Abgriff A aufweist und mit dem Kopplungsglied 16 verbunden ist. Der Resonator 1 weist einen zweiten Abgriff B auf, welcher mit einem weiteren Eingang 18 der Messeinrichtung 7 verbunden ist. Der zweite Abgriff B liegt vorzugsweise in der Nähe eines Knotens der stehenden Welle. Mit der Messeinrichtung ist die elektrische Spannung am Abgriff A - wie oben schon beschrieben - und auch am Abgriff B messbar.

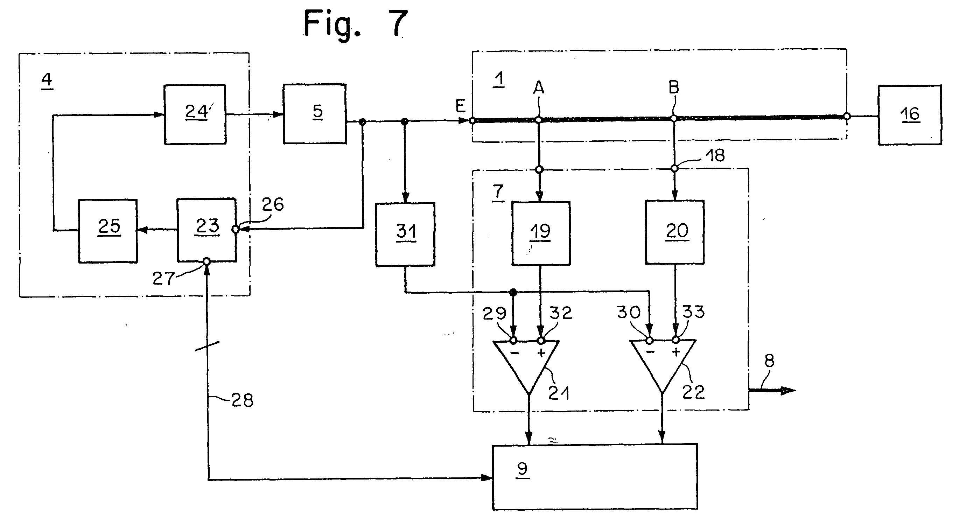

Die Fig. 7 zeigt den mit dem Kopplungsglied 16 verbundenen Resonator 1 mit dem Eingang E und den beiden Abgriffen A und B, den Generator 4, den Impedanzwandler 5, die Messeinrichtung 7 und das Stellglied 9. Die Messeinrichtung 7 weist vorteilhaft ein erstes, eingangsseitig mit dem Abgriff A verbundenes Eingangsglied 19, ein zweites, eingangsseitig mit dem zweiten Abgriff B verbundenes Eingangsglied 20, einen ersten Schwellenschalter 21 und einen zweiten Schwellenschalter 22 auf, wobei die beiden Schwellenschalter 21 und 22 ausgangsseitig mit dem Stellglied 9 verbunden sind.

Der Generator 4 weist mit Vorteil einen Phasenregelkreis (PLL) 23, einen ausgangsseitig mit dem Impedanzwandler 5 verbundenen spannungsgesteuerten Oszillator (VCO) 24 und ein zwischen den Phasenregelkreis 23 und den Oszillator 24 geschaltetes Tiefpassfilter 25 auf, wobei ein Frequenzeingang 26 des Phasenregelkreises 23 mit dem am Ausgang des Impedanzwandlers 5 angeschlossenen Eingang E des Resonators 1 verbunden ist und ein mehrpoliger Steuereingang 27 des Phasenregelkreises 23 über einen Bus 28 am Stellglied 9 angeschlossen ist.

Der Phasenregelkreis 23 ist beispielsweise im wesentlichen durch einen Baustein des Typs MC145191 verwirklicht.

Ein Referenzeingang 29 des ersten Schwellenschalters 21 ist mit einem Referenzeingang 30 des zweiten Schwellenschalters 22 verbunden und über ein Kompensationsglied 31 am Eingang E des Resonators 1 angeschlossen. Durch das Kompensationsglied 31 sind durch Schwankungen der Umgebungstemperatur verursachte Änderungen der Spannung am Eingang E des Resonators 1 derart ausgleichbar, dass ein Referenzsignal am Ausgang des Kompensationsgliedes 31 beziehungsweise an den beiden Referenzeingängen 29 und 30 weitgehend temperaturunabhängig ist.

Der erste Schwellenschalter 21 weist einen Signaleingang 32 auf, welcher mit dem Ausgang des ersten Eingangsgliedes 19 verbunden ist. Ein Signaleingang 33 des zweiten Schwellenschalters 22 ist mit dem Ausgang des zweiten Eingangsgliedes 20 verbunden.

Der als elektrischer Leiter, beziehungsweise als Wellenleiter ausgebildete Resonator 1, weist bei Bedarf mehrere durch Kopplungsglieder gekoppelten Leiterteile auf, wobei mindestens eines der Leiterteile im Bedarfsfall - wenn dies beispielsweise der Aufbau oder die Funktionsweise der Vorrichtung zum Lesen und Beschreiben des Speichers der Chip-Karte 3 erfordert - verschiebbar angeordnet ist.

In der Fig. 8 bedeutet 34 einen ersten Leiterteil und 35 einen zweiten Leiterteil des als Wellenleiter ausgebildeten Resonators 1, an dessen einem Ende der Eingang E ist und dessen anderes Ende mit dem Kopplungsglied 16 verbunden ist. Die Form des ersten Leiterteiles 34 ist an den Aufbau und den verfügbaren Platz in der Vorrichtung zum Lesen und Beschreiben des Speichers der Chip-Karte 3 anpassbar. Der erste Leiterteil 34 weist die beiden Abgriffe A und B und ein erstes Kopplungselement 36 auf.

Ein Ende des zweiten Leiterteils 35 ist mit dem Kopplungsglied 16 und das andere mit einem zweiten Kopplungselement 37 abgeschlossen.

Mit Vorteil ist der erste Leiterteil 34 ein flexibles Kabel und eine gedruckte Schaltung weist das Kopplungsglied 16 und den zweiten Leiterteil 35 mit dem Kopplungselement 37 auf.

Das erste Kopplungselement 36 liegt in einer Ebene e₁, von der ein Teil mit einer gedachten Umrandung 38 eingegrenzt ist, welche auch das erste Kopplungselement 36 einschliesst.

Das zweite Kopplungselement 37 liegt in einer weiteren Ebene e₂, welche mit Vorteil zur ersten Ebene e₁ parallel ist und aus welcher ein Teil mit einer weiteren gedachten Umrandung 39 eingegrenzt ist, welche auch das zweite Kopplungselement 37 einschliesst. Die beiden gedachten Umrandungen 38 und 39 schliessen kongruente Flächen ein.

Der zweite Leiterteil 35 ist in der Richtung eines Pfeiles 40 mindestens soweit verschiebbar, dass die beiden Leiterteile 34 und 35 kapazitiv oder induktiv durch die beiden Kopplungselemente 36 und 37 für eine Welle im Resonator 1 optimal koppelbar sind. Eine vorteilhafte Kopplung der beiden Leiterteile 34 und 35 wird erreicht, wenn sich die beiden Umrandungen 38 und 39 in der Fig. 8 überdecken.

Durch eine Bewegung des zweiten Leiterteils 35 in Richtung des Pfeiles 40 ist die Einrichtung zur Feststellung von Betrugsversuchen an die Chip-Karte 3 anschliessbar, während sie durch eine Bewegung in Gegenrichtung des Pfeiles 40 von der Chip-Karte abkoppelbar ist.

Bei Bedarf wird die Bewegung in Richtung des Pfeiles 40 bei einem Einschieben der Karte 3 in die Vorrichtung zum Lesen und Beschreiben des Speichers der Chip-Karte 3 verursacht.

In einer vorteilhaften Ausführung des Resonators 1 sind die beiden Eingangsglieder 19 und 20 direkt am entsprechenden Abgriff A bzw. B angeordnet und beispielsweise als SMD (surface mounted device) verwirklicht.

Bei Bedarf sind die beiden Abgriffe A bzw. B am Resonator 1 unmittelbar nebeneinander angeordnet oder physikalisch als ein Abgriff ausgeführt, an welchem die Messeinrichtung 7 anschliessbar ist.

Eine vorteilhafte Ausführung der Kopplungsglieder 36 und 37 ist durch je eine einzelne Windung am ersten Leiterteil 34 bzw. am zweiten Leiterteil 35 erreichbar.

Durch das Stellglied 9 sind mindestens zwei verschiedene Werte für die Frequenz des Generators 4 einstellbar, wobei beispielsweise ein erster Wert 500 MHz und ein zweiter Wert 455 MHz beträgt.

Mit Vorteil ist die Länge des zweiten Leiterteiles 35 auf einen Viertel der Wellenlänge im Resonator 1 beim ersten Wert der Frequenz abgestimmt, während die Länge des ersten Leiterteiles 34 vorteilhaft ein Vielfaches dieser halben Wellenlänge beträgt.

Im folgenden ist ein Verfahren beschrieben, bei dem mit der Einrichtung nach der Fig. 7 der Betrugsversuch feststellbar ist.

In einem ersten Schritt wird die Frequenz des Generators 4 auf den ersten Wert eingestellt. Durch das erste Eingangsglied 19 wird die Spannung am Abgriff A erfasst und im ersten Schwellenschalter 21 mit dem am Referenzeingang 29 liegenden Referenzsignal verglichen. Ist die erfasste Spannung nicht in einem erwarteten ersten Bereich, wird der Betrugsversuch erkannt, das Verfahren abgebrochen und die Chip-Karte 1 abgelehnt.

Ist die am Abgriff A erfasste Spannung im erwarteten Bereich, wird in einem zweiten Schritt die Frequenz des Generators 4 auf den zweiten Wert eingestellt. Durch das zweite Eingangsglied 20 wird die Spannung am zweiten Abgriff B erfasst und im zweiten Schwellenschalter 22 mit dem am Referenzeingang 30 liegenden Referenzsignal verglichen. Ist die erfasste Spannung nicht in einem erwarteten zweiten Bereich, wird der Betrugsversuch erkannt und die Chip-Karte 1 abgelehnt.

Die Chip-Karte 1 wird nur angenommen, wenn bei einer Schwingung mit dem ersten Wert der Frequenz die am Abgriff A erfasste Spannung in einem ersten Bereich und bei einer Schwingung mit dem zweiten Wert der Frequenz die am zweiten Abgriff B erfasste Spannung in einem zweiten Bereich liegt.

Dadurch, dass am Resonator 1 bei mindestens zwei verschiedenen Werten der Frequenz je eine Spannung erfasst und je mit einem Sollwert verglichen wird, ist der Betrugsversuch auch dann entdeckbar, wenn die wirksame Länge der Zuleitung 13 ein Vielfaches der halben Wellenlänge der Schwingung bei einem von den mindestens zwei Werten der Frequenz ist.

Mit Vorteil weist die Einrichtung nach der Fig. 7 ohne die Zuleitung 13 (Fig. 1) beim ersten Wert der Frequenz am Abgriff A einen ersten Knoten und beim zweiten Wert der Frequenz am Abgriff B einen zweiten Knoten auf.

In einer vorteilhaften Methode zur Ermittelung des optimalen ersten Wertes der Frequenz der Schwingung im Resonator 1, wird mit dem Stellglied die Frequenz in einer bestimmten Richtung verändert und dann eine erste Schwellfrequenz f, erfasst, wenn ein Ausgangssignal am ersten Schwellenschalter 21 von einem ersten Extremwert - beispielsweise einem Maximum - gegen einen zweiten, im Frequenzbereich des ersten Knotens auftretenden Extremwert - beispielsweise gegen ein Minimum - wechselt. Die Frequenz wird in der gleichen Richtung weiterverändert und eine zweite Schwellenfrequenz f₂ erfasst, wenn das Ausgangssignal vom zweiten Extremwert auf den ersten Extremwert zurückwechselt.

Der optimale erste Wert der Frequenz ist ein Mittelwert der beiden Schwellenfrequenzen f₁ und f₂; vorteilhaft ist der erste Wert das geometrische Mittel (f₁·f₂)^{1/2} der beiden Schwellenfrequenzen f₁ und f₂.

Der optimale zweite Wert der Frequenz wird ermittelt, indem die beschriebene Methode auf den zweiten Knoten übertragen wird, wobei ein Ausgangssignal am zweiten Schwellenschalter 22 benutzt wird.

Die Methode zur Ermittlung der beiden optimalen Werte der Frequenz der Schwingung im Resonator 1 ist mit Vorteil selbsttätig ausführbar. Bei Bedarf wird jede Ausführung der Einrichtung nach der Methode individuell abgeglichen.

## Patentansprüche

1. Einrichtung zur Feststellung von Betrugsversuchen, die das Anschliessen einer elektrischen Zuleitung (13) an einem Anschlusspunkt (12) einer Chip-Karte (3) beinhalten, in einer Vorrichtung zum Lesen und Beschreiben eines Speichers der Chip-Karte (3), wobei die Einrichtung eine Messeinrichtung (7) aufweist, die mit einer Resonanzeinheit (6) verbunden ist,
**dadurch gekennzeichnet,**
**dass** die Resonanzeinheit (6) einen Generator (4) und einen mittels des Generators (4) zur Erzeugung einer elektromagnetischen Schwingung gespeisten und an den Anschlusspunkt (12) gekoppelten Resonator (1) aufweist, und
**dass** die Messeinrichtung (7) Mittel (19 bis 22) zum Erfassen der durch die Zuleitung (13) bewirkten Änderung der elektrischen Eigenschaften des Resonators (1) enthält.

2. Einrichtung nach Anspruch 1,
**dadurch gekennzeichnet,**
**dass** der Resonator (1) mit einem der Kontaktierung des Anschlusspunktes (12) dienenden Kontaktierungselement (2) der Vorrichtung zum Lesen und Beschreiben der Chip-Karte (3) galvanisch verbunden ist.

3. Einrichtung nach Anspruch 1,
**dadurch gekennzeichnet,**
**dass** der Resonator (1) mittels eines Kopplungsgliedes (16) kapazitiv oder induktiv an den Anschlusspunkt (12) gekoppelt ist.

4. Einrichtung nach einem der vorhergehenden Ansprüche,
**dadurch gekennzeichnet,**
**dass** die Resonanzeinheit (6) derart aufgebaut ist, dass im Resonator (1) mindestens dann eine stehende Welle generierbar ist, wenn die elektrische Zuleitung (13) nicht angeschlossen ist.

5. Einrichtung nach einem der vorhergehenden Ansprüche,
**dadurch gekennzeichnet,**
**dass** der Resonator (1) ein elektrischer Wellenleiter ist.

6. Einrichtung nach Anspruch 3 und 5,
**dadurch gekennzeichnet,**
**dass** der elektrische Wellenleiter einen ersten Leiterteil (34) mit einem ersten Kopplungselement (36) und einen ein Kopplungsglied (16) und ein zweites Kopplungselement (37) verbindenden zweiten Leiterteil (35) umfasst, und
**dass** die beiden Leiterteile (34; 35) gegeneinander verschiebbar angeordnet und durch die beiden Kopplungselemente (36; 37) kapazitiv oder induktiv koppelbar sind.

7. Einrichtung nach einem der Ansprüch 5 oder 6,
**dadurch gekennzeichnet,**
**dass** der elektrische Wellenleiter mindestens einen Abgriff (A) aufweist,
**dass** die Messeinrichtung (7) eingangsseitig mit dem Abgriff (A) verbunden ist, und
**dass** die Messeinrichtung (7) Mittel (19, 21) zum Messen der Spannung am Abgriff (A) umfasst.

8. Einrichtung nach Anspruch 7,
**dadurch gekennzeichnet,**
**dass** der elektrische Wellenleiter einen zweiten Abgriff (B) aufweist, welcher mit der Messeinrichtung (7) verbunden ist, und dass die Messeinrichtung (7) Mittel (20, 22) zum Messen der Spannung am Abgriff (B) umfasst.

9. Einrichtung nach Anspruch 1,
**dadurch gekennzeichnet,**
**dass** der Resonator (1) ein Schwingkreis ist, der einen Kondensator (Cs) und eine zum Kondensator (Cs) in Reihe geschaltete Spule (Ls) aufweist.

10. Einrichtung nach Anspruch 1,
**dadurch gekennzeichnet,**
**dass** der Resonator (1) ein Schwingkreis ist, der einen Kondensator (Cp) und eine parallel zum Kondensator (Cp) geschaltete Spule (Lp) aufweist.

11. Einrichtung nach einem der vorhergehenden Ansprüche,
**dadurch gekennzeichnet,**
**dass** die Messeinrichtung (7) einen Ausgang aufweist, der über ein Stellglied (9) auf den Generator (4) zurückgeführt ist, und
**dass** das Stellglied (9) Mittel zum Umschalten der vom Generator (4) generierten Frequenz der elektromagnetischen Schwingung im Resonator (1) aufweist, wobei die Menge der durch das Stellglied (9) einstellbaren Frequenzen wenigstens zwei Werte f₁, f₂ umfasst.

12. Einrichtung nach einem der vorhergehenden Ansprüche,
**dadurch gekennzeichnet,**
**dass** der Generator (4) einen Phasenregelkreis (23), einen ausgangsseitig mit einem Impedanzwandler (5) verbundenen, spannungsgesteuerten Oszillator (24) und ein zwischen dem Phasenregelkreis (23) und dem Oszillator geschaltetes Tiefpassfilter (25) umfasst,
**dass** ein Frequenzeingang (26) des Phasenregelkreises (23) mit einem Ausgang des Impedanzwandlers (5) verbunden ist, und
**dass** ein Stellglied (9) zum Regeln bzw. Steuern der Frequenz des Generators (4) mittels eines Buses (28) an einen Steuereingang (27) des Phasenregelkreises (23) angeschlossen ist.

13. Verfahren zur Feststellung von Betrugsversuchen durch Anschliessen einer elektrischen Zuleitung (13) an einem Anschlusspunkt (12) einer Chip-Karte (3) in einer Vorrichtung zum Lesen und Beschreiben eines Speichers der Chip-Karte (3),
**dadurch gekennzeichnet,**
**dass** mittels eines Generators (4) eine elektromagnetische Schwingung in einem Resonator (1) erzeugt wird,
**dass** der Resonator (1) an den Anschlusspunkt (12) gekoppelt wird, und
**dass** die durch die Zuleitung (13) bewirkte Änderung der elektrischen Eigenschaften des Resonators (1) mittels einer Messeinrichtung (7) erfasst wird.

14. Verfahren nach Anspruch 13,
**dadurch gekennzeichnet,**
**dass** die Impedanz oder die Spannung am Eingang des Resonators (1) von der Messeinrichtung (7) gemessen und mit einem vorbestimmten Sollwert verglichen wird, wobei der vorbestimmte Sollwert der Impedanz bzw. der Spannung am Eingang des Resonators (1) ohne die am Anschlusspunkt (12) liegende Zuleitung (13) entspricht.

15. Verfahren nach Anspruch 13 oder 14,
**dadurch gekennzeichnet,**
**dass** die Spannung des als Wellenleiter ausgebildeten und mit einem Abgriff (A) ausgestatteten Resonators (1) am Abgriff (A) von der Messeinrichtung (7) gemessen und mit einem Sollwert der Spannung verglichen wird, welche am Abgriff (A) anliegt, wenn die Zuleitung (13) am Anschlusspunkt (12) nicht angeschlossen ist.

16. Verfahren nach Anspruch 15,
**dadurch gekennzeichnet,**
**dass** die Frequenz eines Eingangssignals am Resonator (1) so lange verändert wird, bis die Spannung am Abgriff (A) einen bestimmten Zielwert erreicht, worauf die Frequenz des Eingangssignals gemessen und mit einem vorbestimmten Sollwert der Frequenz verglichen wird, wobei die Spannung am Abgriff (A) den bestimmten Zielwert aufweist, wenn der Resonator (1) mit dem vorbestimmten Sollwert der Frequenz schwingt und die Zuleitung (13) am Anschlusspunkt (12) nicht angeschlossen ist.

17. Verfahren nach Anspruch 15 oder 16,
**dadurch gekennzeichnet,**
**dass** im Resonator (1) eine elektromagnetische Schwingung mit einer ersten Frequenz des Generators (4) generiert wird,
**dass** bei einem ersten Abgriff (A) im Resonator (1) die Spannung gemessen und mit einem vorbestimmten ersten Sollwert verglichen wird, wobei der erste Sollwert der Spannung im Resonator (1) ohne die am Anschlusspunkt (12) liegende Zuleitung (13) erzeugt wird,
**dass** die Frequenz des Generators (4) auf einen zweiten, vom ersten verschiedenen Wert eingestellt wird,
**dass** bei einem zweiten Abgriff (B) im Resonator (1) die Spannung erneut gemessen und mit einem weiteren vorbestimmten Sollwert verglichen wird, wobei der weitere vorbestimmte Sollwert am Resonator (1) ohne die am Anschlusspunkt (12) liegende Zuleitung (13) messbar ist, und
**dass** die Chip-Karte (3) nur angenommen wird, wenn die Spannung am Resonator (1) beim ersten und beim zweiten Wert der Frequenz je innerhalb eines vorbestimmten Bereiches liegt.

18. Verfahren nach Anspruch 17,
**dadurch gekennzeichnet,**
**dass** vom Generator (4) im Resonator (1) eine stehende Welle generiert wird und dass bei der ersten Frequenz (f₁) ein Spannungsknoten in der Nähe des Abgriffs (A) und bei der zweiten Frequenz (f₂) ein Spannungsknoten in der Nähe des Abgriffs (B) erzeugt wird, sofern der Resonator (1) nicht mit der Zuleitung (13) gekoppelt ist.

19. Verfahren nach einem der Ansprüche 13 bis 18,
**dadurch gekennzeichnet,**
**dass** aufgrund der Grösse der Differenz zwischen dem Messwert und dem zugehörigen Sollwert ein Betrugsversuch erkannt und von der Messeinrichtung (7) ein Alarmsignal erzeugt wird.

## Claims

1. Device for determining fraud attempts, including the connection of an electric feed line (13) to a connection point (12) of a chip card (3), in an apparatus for reading and writing in a memory on the chip card (3), said device comprises a measuring unit (7) connected to a resonance unit (6) **characterized in that** said resonance unit (6) comprises a generator (4) producing an electromagnetic oscillation, said generator (4) being coupled to the resonator (1) feeds the contact point (12),
and that the measuring unit (7) comprises means to detect variations of the electrical properties of the resonator (1) caused by the feed line (13).

2. Device according to claim 1 **characterized in that** the resonator (1) is galvanically connected to a contacting element (2) serving for contacting of the connecting point (12) of the apparatus for reading and writing on the chip card (3).

3. Device according to claim 1 **characterized in that** the resonator (1) is capacitively or inductively coupled to the connecting point (12) by means of a coupling member (16).

4. Device according to one of the preceding claim **characterized in that** the resonance unit (6) is arranged so that a standing wave can be generated in the resonator (1) at least when the electric feed line (13) is not connected.

5. Device according to one of the preceding claim **characterized in that** the resonator (1) is an electrical wave conductor.

6. Device according to claims 3 and 5 **characterized in that** the electrical wave conductor comprises a first conductor part (34) with a first coupling element (36) and a second conductor part (35) connected to a second coupling element (37) and to a coupling member (16),
and that both conductors parts (34, 35) are arranged to be adjustable each other and to be coupled capacitively or inductively through both coupling elements (36, 37).

7. Device according to one of the claim 5 or 6, **characterized in that** the electric wave conductor comprises at least one tapping (A),
that the input of the measuring unit (7) is connected to the tapping (A),
and that said measuring unit (7) comprises means (19, 21) for measuring the voltage at said tapping (A).

8. Device according to claim 7, **characterized in, that** the electric wave conductor comprises a second tapping (B) which is connected to the measuring unit (7)
and that said measuring unit (7) comprises means (20, 22) for measuring the voltage at said tapping (B).

9. Device according to claim 1 **characterized in that** the resonator (1) is a resonant circuit comprising a capacitor (Cs) and a coil (Ls), which is connected in series with the capacitor (Cs).

10. Device according to claim 1 **characterized in that** the resonator (1) is a resonant circuit comprising a capacitor (Cp) and a coil (Lp), which is connected in parallel with the capacitor (Cp).

11. Device according to one of the preceding claim **characterized in that** the measuring unit (7) comprises an output directed to the generator (4) through a control member (9)
and that said control member (9) comprises means to switch the frequency of the electromagnetic oscillation generated by the generator (4) in the resonator (1), where the number of frequencies adjustable by the control member (9) being at least set at two values f1, f2.

12. Device according to one of the preceding claim **characterized in that** the generator (4) comprises a phase control circuit (23), a voltage controlled oscillator (24) connected to an impedance converter (5) at the output of said generator (4) and a switching low pass filter (25) connected between the phase control circuit (23) and the oscillator,
that a frequency input (26) of the phase control circuit (23) is connected to an output of the impedance converter (5),
and that a control member (9) for adjusting and/or driving the frequency of the generator (4) with the mean of a bus (28) is connected to a driving input (27) of the phase control circuit (23).

13. Process for determining fraud attempts, through the connection of an electric feed line (13) to a connection point (12) of a chip card (3), in an apparatus for reading and writing a memory of said chip card (3), **characterized in that**,
an electromagnetic oscillation is produced in a resonator (1) with the mean of a generator (4),
the resonator (1) is coupled to the connection point (12)
and that the variation of the electric properties of the resonator (1), caused by the feed line (13), is detected with the mean of a measuring unit (7)

14. Process according to claim 13 **characterized in that** the impedance or the voltage at the input of the resonator (1) is measured by the measuring unit (7) and compared with a predetermined reference value, which corresponds to the impedance or to the voltage at the input of the resonator (1) without the connection of the feed line (13) with the connection point (12).

15. Process according to claim 13 or 14 **characterized in that** the voltage of the resonator (1), which is shaped as a wave conductor equipped with a tapping (A) is measured at the tapping (A) and compared with a reference value of the voltage located on the tapping (A) when the feed line (13) is not connected to the connection point (12).

16. Process according to claim 15 **characterized in that** the frequency of an input signal on the resonator (1) varies as long as the voltage at the tapping (A) reaches a determined target value, the frequency of the input signal is measured and compared with a predetermined reference value of the frequency, and where the voltage at the tapping (A) having the determined target value, when the resonator (1) oscillates with the predetermined reference value of the frequency and when the feed line (13) is not connected to the connection point (12).

17. Process according to claim 15 or 16 **characterized in that** an electromagnetic oscillation is generated in the resonator (1) with a first frequency of the generator (4), the voltage at a first tapping (A) in the resonator (1) is measured and compared with a predetermined first reference value of the voltage, which is produced in the resonator (1) without the connection of the feed line (13) with the connection point (12),
the frequency of the generator (4) is adjusted to a second value different from the first one,
the voltage at a second tapping (B) in the resonator (1) is measured again and compared with an other predetermined reference value, which is measurable at the resonator (1) without the connection of the feed line (13) with the connection point (12)
and the chip card (3) is accepted only when each voltage at the resonator (1) for the first and the second frequency value is comprised in a predetermined range.

18. Process according to claim 17 **characterized in that** a standing wave is generated by the generator (4) in the resonator (1) and that voltage nodes are produced, one near the tapping (A) at the first frequency f1 and one near the tapping (B) at the second frequency f2, if the resonator (1) is not coupled with the feed line (13).

19. Process according to one of the claims 13 to 18 **characterized in that** an alarm signal is produced by the measuring unit (7) when a fraud attempt is recognized according to the amplitude of the difference between the measured value and the associated reference value.

## Revendications

1. Dispositif pour déterminer des tentatives de fraude, incluant la connexion d'un conducteur électrique (13) à un point de connexion (12) d'une carte à puce (3), dans un appareil pour lire et écrire dans une mémoire sur la carte à puce (3), ledit dispositif comprend une unité de mesure (7) connectée à une unité de résonance (6) **caractérisé en ce que** ladite unité de résonance (6) comprend un générateur (4) produisant une oscillation électromagnétique, ledit le générateur (4) étant couplé au résonateur (1) qui alimente le point de contact (12),
et que l'unité de mesure (7) comprend des moyens pour détecter des variations des propriétés électriques du résonateur (1) provoquées par le conducteur électrique (13).

2. Dispositif selon la revendication 1 **caractérisé en ce que** le résonateur (1) est connecté galvaniquement à un élément de contact (2) servant de contact au point de connexion (12) de l'appareil pour lire et écrire sur la carte à puce (3).

3. Dispositif selon la revendication 1 **caractérisée en ce que** le résonateur (1) est couplé capacitivement ou inductivement au point de connexion (12) au moyen d'un membre de couplage (16).

4. Dispositif selon l'une des revendications précédentes **caractérisé en ce que** l'unité de résonance (6) est agencée de manière à produire une onde stationnaire dans le résonateur (1) au moins lorsque le conducteur électrique (13) n'est pas connecté.

5. Dispositif selon l'une des revendications précédentes **caractérisé en ce que** le résonateur (1) est un conducteur d'onde électrique.

6. Dispositif selon les revendications 3 et 5 **caractérisé en ce que** le conducteur d'onde électrique comprend une première partie conductrice (34) avec un premier élément de couplage (36) et une seconde partie conductrice (35) connectée à un second élément de couplage (37) et à un membre de couplage (16),
et que les deux parties conductrices (34, 35) sont agencées pour être réglable l'une par rapport à l'autre et pour être couplées capacitivement ou inductivement par les deux éléments de couplage (36, 37).

7. Dispositif selon une de la revendication 5 ou 6, **caractérisé en ce que** le conducteur d'onde électrique comprend au moins un point de mesure (A),
que l'entrée de l'unité de mesure (7) est connectée au point de mesure (A),
et que ladite unité de mesure (7) comprend des moyens (19, 21) pour mesurer la tension sur ledit point de mesure (A).

8. Dispositif selon la revendication 7, **caractérisé en ce que** le conducteur d'onde électrique comprend un second point de mesure (B) connecté à l'unité de mesure (7)
et que ladite unité de mesure (7) comprend des moyens (20, 22) pour mesurer la tension sur ledit point de mesure (B).

9. Dispositif selon la revendication 1 **caractérisé en ce que** le résonateur (1) est un circuit résonant comprenant un condensateur (Cs) et une bobine (Ls) connectée en série avec le condensateur (Cs).

10. Dispositif selon la revendication 1 **caractérisée en ce que** le résonateur (1) est un circuit résonant comprenant un condensateur (Cp) et une bobine (Lp) connectée en parallèle avec le condensateur (Cp).

11. Dispositif selon l'une des revendications précédentes **caractérisé en ce que** l'unité de mesure (7) comprend une sortie dirigée vers le générateur (4) par un membre de contrôle (9)
et que ledit membre de contrôle (9) comprend des moyens pour commuter la fréquence de l'oscillation électromagnétique produite par le générateur (4) dans le résonateur (1), où le nombre de fréquences réglables par le membre de contrôle (9) étant au moins fixé à deux valeurs f1, f2.

12. Dispositif selon l'une des revendications précédentes, **caractérisé en ce que** le générateur (4) comprend un circuit de contrôle de phase (23), un oscillateur contrôlé par une tension (24) connecté à un convertisseur d'impédance (5) à la sortie dudit générateur (4) et un filtre passe-bas commuté (25) connecté entre le circuit de contrôle de phase (23) et l'oscillateur,
qu'une entrée de fréquence (26) du circuit de contrôle de phase (23) est connectée à une sortie du convertisseur d'impédance (5),
et qu'un membre de contrôle (9), pour ajuster et/ou piloter la fréquence du générateur (4) au moyen d'un bus (28), est connecté à une entrée de commande (27) du circuit contrôle de phase (23).

13. Procédé de détermination de tentatives de fraude, par la connexion d'un conducteur électrique (13) à un point de connexion (12) d'une carte à puce (3), dans un appareil pour lire et écrire dans une mémoire de ladite carte à puce (3), **caractérisé en ce qu'**une oscillation électromagnétique est produite dans un résonateur (1) au moyen d'un générateur (4),
le résonateur (1) est couplé au point de connexion (12),
et qu'une variation des propriétés électriques du résonateur (1) provoquée par le conducteur électrique (13) est détectée au moyen d'une unité de mesure (7).

14. Procédé selon la revendication 13 **caractérisée en ce que** l'impédance ou la tension à l'entrée du résonateur (1) sont mesurés par l'unité de mesure (7) et comparés avec une valeur de référence prédéterminée correspondant à l'impédance ou à la tension à l'entrée du résonateur (1) sans la connexion du conducteur électrique (13) avec le point de connexion (12).

15. Procédé selon la revendication 13 ou 14 **caractérisé en ce que** la tension sur le résonateur (1) formé d'un conducteur d'onde équipé d'un point de mesure (A) est mesurée sur le point de mesure (A) et comparée avec une valeur de référence de la tension située sur le point de mesure (A) lorsque le conducteur électrique (13) n'est pas connecté au point de connexion (12).

16. Procédé selon la revendication 15 **caractérisé en ce que** la fréquence d'un signal d'entrée sur le résonateur (1) varie tant que la tension sur le point de mesure (A) atteint une valeur cible déterminée, la fréquence du signal d'entrée est mesurée et comparée avec une valeur de référence prédéterminée de la fréquence, et où la tension sur le point de mesure (A) ayant la valeur cible déterminée, lorsque le résonateur (1) oscille avec la valeur de référence prédéterminée de la fréquence et lorsque le conducteur électrique (13) n'est pas connecté au point de connexion (12).

17. Procédé selon la revendication 15 ou 16 **caractérisé en ce qu'**une oscillation électromagnétique est produite dans le résonateur (1) avec une première fréquence du générateur (4),
la tension sur un premier point de mesure (A) dans le résonateur (1) est mesurée et comparée avec une première valeur de référence prédéterminée de la tension qui est produite dans le résonateur (1) sans la connexion du conducteur électrique (13) avec le point de connexion (12),
la fréquence du générateur (4) est ajustée à une seconde valeur différente de la première,
la tension sur le second point de mesure (B) dans le résonateur (1) est mesurée de nouveau et comparée avec une autre valeur de référence prédéterminée qui est mesurable sur le résonateur (1) sans la connexion du conducteur électrique (13) avec le point de connexion (12)
et que la carte à puce (3) est acceptée seulement lorsque chaque tension sur le résonateur (1) est comprise dans un intervalle prédéterminé pour la première et la deuxième valeur de fréquence.

18. Procédé selon la revendication 17 **caractérisée en ce qu'**une onde stationnaire est générée par le générateur (4) dans le résonateur (1) et que des noeuds de tension sont produits, l'un près du point de mesure (A) à la première fréquence f1 et l'autre près du point de mesure (B) à la seconde fréquence f2, si le résonateur (1) n'est pas couplé avec le conducteur électrique (13).

19. Procédé selon l'une des revendications 13 à 18 **caractérisé en ce qu'**un signal d'alarme est produit par l'unité de mesure (7) lorsqu'une tentative de fraude est reconnue selon l'amplitude de la différence entre la valeur mesurée et la valeur de référence associée.
